Europäisches Patentamt

European Patent Office

Office européen des brevets

(11) Publication number: 0 369 018 A1

# EUROPEAN PATENT APPLICATION
## published in accordance with Art. 158(3) EPC

(21) Application number: 89901607.5

(22) Date of filing: 23.01.89

(86) International application number: PCT/JP89/00056

(87) International publication number: WO 89/06856 (27.07.89 89/16)

(51) Int. Cl.5: G11B 19/16, G06F 1/00, G06F 3/06

(30) Priority: 22.01.88 JP 119/87

(43) Date of publication of application: 23.05.90 Bulletin 90/21

(84) Designated Contracting States: DE FR GB IT

(71) Applicant: FANUC LTD
3580, Shibokusa Aza-Komanba Oshino-mura
Minamitsuru-gun Yamanashi 401-05(JP)

(72) Inventor: SEKI, Masaki
3-15-2-406, Takaido-nishi
Suginami-ku Tokyo 168(JP)
Inventor: TAKEGAHARA, Takashi
256-2, Nishiterakata-cho
Hachioji-shi Tokyo 192-01(JP)
Inventor: YAMAKI, Katsunobu Fanuc Dai-3
Vira-karamatsu
3527-1, Shibokusa Oshino-mura
Minamitsuru-gun Yamanashi 401-05(JP)

(74) Representative: Billington, Lawrence Emlyn et
al
Haseltine Lake & Co Hazlitt House 28,
Southampton Buildings Chancery Lane
London WC2A 1AT(GB)

(54) METHOD OF INSTRUCTING THE INITIALIZATION OF AN EXTERNAL MEMORY MEDIUM.

(57) When a floppy disk (FD1, FD2) as an external memory medium is set to a floppy disc drive (8), a processing unit (11) checks whether a switch (SSW) that instructs the initialization is turned on or not, and stores the initialization instruction only when the switch (SSW) is on. When the data are written onto the external memory medium (FD1, FD2), the processing unit (11) determines whether the initialization instruction is stored or not. If the initialization instruction is stored, the external memory medium (FD1, FD2) is initialized to write the data. If not, the data are written without initializing the external memory medium.

FIG. 1

## DESCRIPTION

## METHOD OF COMMANDING INITIALIZATION OF
## EXTERNAL STORAGE MEDIUM

### Technical Field

This invention relates to a method of commanding initialization of an external storage medium and, more particularly, to an external storage medium initialization commanding method for initializing an external storage medium and writing data in the storage medium.

### Background Art

In a system wherein an external storage device having an exchangeable storage medium is connected to the system main body, it is necessary to initialize the storage medium before data can be written in the storage medium. To this end, conventionally initialization is performed through methods indicated by the following (a) through (c):

(a) When the external storage device is not being used for data input/output, the external storage medium is set and a plurality of switches provided on the external storage device are turned on or off through a prescribed operation to initialize the storage medium.

(b) An operation for initializing the external storage medium is incorporated in an operation performed at the time of writing, and initialization is carried out automatically when the storage medium to undergo writing is exchanged.

(c) Initialization is commanded by entering an initialization command using a keyboard, etc., of the system to which the external storage device is connected.

However, with the initialization commanding method (a), the operator must remember the complicated switching operation for initialization. In a case where data for writing are to be stored over a plurality of storage media, the next storage medium cannot be initialized while writing is in progress. With the initialization commanding method (b), there is the danger that if a storage medium already containing necessary data is exchanged accidentally, the necessary data will be initialized. Further, when commanding initialization in accordance with the initialization commanding method (c), the storage medium must be extracted and verified each time to determine whether it is permissible to initialize the storage medium. If data for writing are to be stored over a plurality of storage media, the next storage medium cannot be initialized while writing is in progress.

Accordingly, an object of the present invention is to provide an external storage medium initialization commanding method in which the operation for commanding initialization is simple and there is no danger of necessary data being erased by initialization.

Disclosure of the Invention

In a method of commanding initialization of an external storage medium according to the invention includes, there is provided an initialization command switch for commanding initialization of an external storage medium. When the external storage medium is set in an external storage device, a processor determines whether the initialization command switch is in the on state and stores the initialization command only when the switch is in the on state. When data are written in the external storage medium, the processor determines whether the initialization command has been stored. If the initialization command has been stored, the data are written after the set external storage medium is initialized. If the initialization command has not been stored, the data are written without the external storage medium being initialized.

Brief Description of the Drawings

Fig. 1 is a block diagram of a system for practicing the method of commanding initialization of an external storage medium according to the present invention; and

Figs. 2 and 3 are flowcharts of processing for commanding initialization of an external storage medium according to the present invention, in which Fig. 2 is a flowchart of processing for detecting that the external storage medium has been set, and Fig.3 is a flowchart of processing for writing data.

Best Mode for Carrying Out the Invention

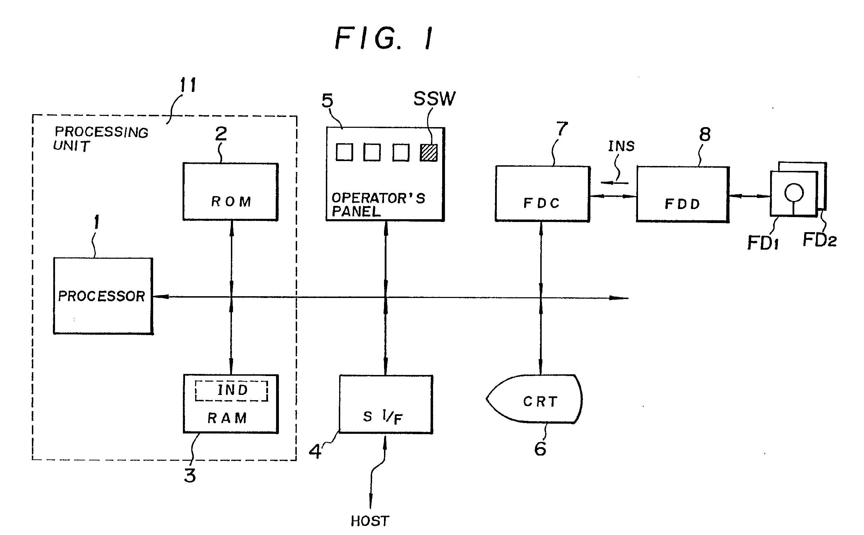

Fig. 1 is a block diagram of a system for practicing the method of commanding initialization of an external storage medium according to the present invention.

Numeral 1 denotes a processor, 2 a ROM for storing a control program, and 3 a RAM for storing a processing program, the results of processing and various other data. The processor, ROM and RAM construct a processing unit 11. Numeral 4 denotes a serial interface (e.g., an SI/F in compliance with RS-232-C) for administering an exchange of data, in the form of a bit serial, with a host or the like. Numeral 5 denotes an operator's panel, 6 a display unit (CRT), 7 a floppy disk controller (FDC), 8 a floppy disk drive (FDD) and $FD_1$, $FD_2$ floppy disks. Disposed on the operator's panel 5 is an initialization command switch SSW for commanding initialization of a floppy disk serving as an external storage medium.

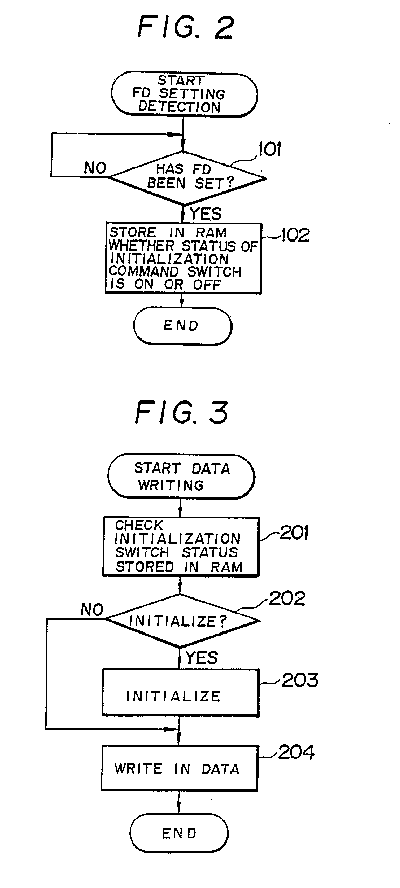

Figs. 2 and 3 are flowcharts of processing for commanding initialization of the external storage medium according to the present invention, in which Fig. 2 is a flowchart of processing for detecting that the external storage medium has been set, and Fig. 3 is a flowchart of processing for writing data.

Processing for commanding initialization of the external storage medium according to the present invention will now be described in line with the flowcharts of Figs. 2 and 3.

(a) Processing for detecting setting of the external storage medium

Before floppy disk $FD_1$ is set in the floppy disk drive 8, the operator verifies whether it is permissible to initialize the floppy disk $FD_1$. In case of initialization, the floppy disk $FD_1$ is set in the floppy disk drive 8 while the initialization command switch SSW disposed on the operator's panel 5 is pressed. When the floppy disk $FD_1$ is set in the floppy disk drive 8, a set-complete signal INS is outputted to the processor 1 through the floppy disk controller 7. As a result, the processor 1 is notified of the fact that the floppy disk $FD_1$ has been set in the floppy disk drive 8 (step 101). It should be noted that the set-complete signal INS is not outputted until the floppy disk $FD_1$ has been set correctly in the floppy disk drive 8.

When the set-complete signal INS is received, the processor 1 immediately checks to see whether the initialization command switch SSW is on, stores ON data ("1") in the RAM 3 as an "INITIALIZATION COMMAND" IND only when the switch is in the ON state (step 102), and ends the processing for detecting the setting of the floppy disk.

If the initialization command switch SSW is in the off state when the set-complete signal INS is received, off data ("0") is stored as the "INITIALIZATION COMMAND" IND.

(b) Processing for writing data

When a write command and the data are sent by a host via the serial interface 4 in a state where the floppy disk $FD_1$ has been set in the floppy disk drive 8, the processor 1 starts the data write processing shown in Fig. 3. More specifically, the processor 1 checks to see whether the "INITIALIZATION COMMAND" stored in the RAM 3 is on or off (step 201). If the "INITIALIZATION COMMAND" IND is on, the floppy disk controller 7 is caused to initialize the floppy disk $FD_1$; if the "INITIALIZATION COMMAND" IND is off, initialization is not carried out (steps 202, 203).

Next, the processor 1 causes the floppy disk controller 7 to write data from the host, temporarily stored in the buffer of the interface 4 or in the RAM 3, in the floppy disk $FD_1$. That is, the floppy disk controller 7 writes in data from the beginning of the floppy disk $FD_1$ if the floppy disk has been initialized and from the end of the last data stored on the floppy disk $FD_1$ if the disk has not been initialized (step 204). Data-write processing is then ended.

In the foregoing the setting of only the one floppy disk $FD_1$ is described. However, similar initialization is performed even if the data written extend over a plurality of floppy disks. For example, if data cover the two floppy disks $FD_1$, $FD_2$, whether initialization is permissible is verified when the second disk is set. If the disk is one allowed to be initialized, this second disk is set in the floppy disk drive 8 while the initialization command switch SSW disposed on the operator's panel 5 is pressed. If initialization must not be performed, the second disk is set without pressing the initialization command switch.

In accordance with the invention as described above, an initialization command is stored only when a switch for commanding initialization is in the on state at the time an external storage medium is set. When data are written, it is determined whether the initialization command has been stored. If the initialization command has been stored, the data are written after the set external storage medium is initialized. If the initialization command has not been stored, the data are written without the external storage medium being initialized. As a result, the operation for commanding initialization is simple and there is no danger of necessary data being erased accidentally by initialization processing.

CLAIMS:

1.    An external storage medium initialization commanding method for initializing an external storage medium and writing data in the storage medium, characterized by:

providing an initialization command switch for commanding initialization of the external storage medium;

determining whether the initialization command switch is in the on state when the external storage medium is set in an external storage device;

storing the initialization command only when the switch is in the on state;

determining whether the initialization command has been stored when data are written in the external storage medium;

if the initialization command has been stored, writing in the data after said external storage medium is initialized; and

if the initialization command has not been stored, writing in the data without the external storage medium being initialized.

2.    An external storage medium initialization commanding method according to claim 2, characterized by generating a set-complete signal when the external storage medium has been set in the external storage device, and forming the initialization command based on an on/off state of the initialization command switch when said set-complete signal is generated.

# FIG. 1

EP 0 369 018 A1

## FIG. 2

```
    ┌─────────────────┐
    │      START      │
    │   FD SETTING    │
    │   DETECTION     │
    └────────┬────────┘
             │
    ┌────────▼────────┐
NO  ╱                 ╲    101
◄───   HAS FD          
    ╲   BEEN SET?     ╱
    └────────┬────────┘
           YES │
    ┌──────────▼──────────┐
    │ STORE IN RAM        │  102
    │ WHETHER STATUS OF   │
    │ INITIALIZATION      │
    │ COMMAND SWITCH      │
    │ IS ON OR OFF        │
    └──────────┬──────────┘
    ┌──────────▼──────────┐
    │        END          │
    └─────────────────────┘
```

## FIG. 3

```
    ┌─────────────────┐
    │   START DATA    │
    │    WRITING      │
    └────────┬────────┘
    ┌────────▼────────┐
    │ CHECK           │  201
    │ INITIALIZATION  │
    │ SWITCH STATUS   │
    │ STORED IN RAM   │
    └────────┬────────┘
             │           202
    ┌────────▼────────┐
NO  ╱                 ╲
◄───   INITIALIZE?     
    ╲                 ╱
    └────────┬────────┘
           YES │
    ┌──────────▼──────────┐
    │    INITIALIZE       │  203
    └──────────┬──────────┘
    ┌──────────▼──────────┐
    │   WRITE IN DATA     │  204
    └──────────┬──────────┘
    ┌──────────▼──────────┐
    │        END          │
    └─────────────────────┘
```

# INTERNATIONAL SEARCH REPORT

International Application No  PCT/JP 89/00056

**I. CLASSIFICATION OF SUBJECT MATTER** (if several classification symbols apply, indicate all) 6

According to International Patent Classification (IPC) or to both National Classification and IPC

Int. Cl$^4$    G11B19/16, G06F1/00, 350, G06F1/00, 370, G06F3/06 301

**II. FIELDS SEARCHED**

| Minimum Documentation Searched 7 | |
|---|---|
| Classification System | Classification Symbols |
| IPC | G11B19/16, G11B19/02, G11B19/04, G06F1/00 350, G06F1/00 370, G06F3/06 301 |

| Documentation Searched other than Minimum Documentation<br>to the Extent that such Documents are Included in the Fields Searched 8 |
|---|
| Jitsuyo Shinan Koho          1926 - 1888<br>Kokai Jitsuyo Shinan Koho     1971 - 1988 |

**III. DOCUMENTS CONSIDERED TO BE RELEVANT** 9

| Category * | Citation of Document, 11 with indication, where appropriate, of the relevant passages 12 | Relevant to Claim No. 13 |
|---|---|---|
| A | JP, U, 61-203460 (Mitsubishi Electric Corporation)<br>20, December 1986 (20. 12. 86)<br>Page 1, left column lines 2 to 6<br>(Family: none) | 1, 2 |
| A | JP, A, 61-40634 (NEC Corporation)<br>26 February 1986 (26. 02. 86)<br>Page 1, lower left column, lines 5 to 15<br>(Family: none) | 1, 2 |
| A | JP, A, 54-29533 (Toshiba Corp.)<br>5 March 1979 (05. 03. 79)<br>Page 1, lower left column, lines 13 to 19<br>(Family: none) | 1, 2 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| February 7, 1989 (07. 02. 89) | February 20, 1989 (20. 02. 89) |
| International Searching Authority | Signature of Authorized Officer |
| Japanese Patent Office | |